# FASCICULE DE BREVET EUROPEEN

(11) **EP 4 049 389 B1**
(45) Date de publication et mention de la délivrance du brevet: **26.03.2025**
(21) Numéro de dépôt: 20796870.2
(22) Date de dépôt: 06.10.2020
(51) Int. Cl.: H04B 13/00

(54) **PROCEDE ET TERMINAUX DE VALIDATION D'UNE TRANSACTION LORS D'UNE COMMUNICATION RADIO**
VERFAHREN UND VORRICHTUNGEN ZUR VALIDIERUNG EINER TRANSAKTION WÄHREND DER FUNKKOMMUNIKATION
METHOD AND DEVICES FOR VALIDATING A TRANSACTION DURING A RADIO COMMUNICATION

(30) Priorité: 24.10.2019 FR 1911945
(43) Date de publication de la demande: 31.08.2022
(73) Titulaire: Orange, 92130 Issy-les-Moulineaux (FR)
(72) Inventeur: DUSSAUME, Philippe, 92326 CHÂTILLON CEDEX (FR); JAVAUDIN, Jean-Philippe, 92326 CHÂTILLON CEDEX (FR)
(86) Numéro de dépôt international: PCT/FR2020/051747
(87) Numéro de publication internationale: WO 2021/079039

(56) Documents cités:
- WO-A1-2016/001506
- WO-A1-2017/093639
- WO-A1-2019/063902
- US-A1- 2004 152 440

## Description

### Domaine de l'invention

L'invention concerne les communications sans fils à courte portée pour la transmission de données entre deux dispositifs par l'intermédiaire du corps humain. Plus précisément, l'invention porte sur un système pour effectuer des transactions entre un terminal porté par un utilisateur et un dispositif de communication tel qu'une station de base ou un lecteur, connecté par exemple à un serveur de transactions, en utilisant la capacité de conductivité du corps humain pour transmettre les ondes électromagnétiques porteuses de telles communications sans fil.

### Art antérieur

Les communications en champ proche, usuellement connues sous le sigle « NFC » (pour« Near Field Communication»), basées principalement sur la norme ISO (International Standard Organisation) 14443, utilisent des technologies sans fil pour permettre un échange d'informations entre deux périphériques éloignés d'une courte distance, typiquement inférieure à dix centimètres. Les communications de ce type offrent de nombreuses applications, par exemple dans les domaines du paiement ou du transport. Le récepteur en champ proche reçoit un message de la part de l'émetteur en champ proche. Un tel message peut correspondre, dans le contexte précité, à la validation d'une transaction telle que par exemple l'échange d'un ticket (de spectacle, de transport, etc.), un paiement, le lancement d'un service personnalisé sur un ordinateur, un téléviseur, l'accès à un local, etc.

On connaît dans l'état de la technique un système permettant d'échanger de tels messages, dans lequel le récepteur est contenu dans un terminal porté par un utilisateur, les messages étant reçus par le récepteur au cours d'une communication intracorporelle via l'utilisateur du terminal. Une communication intracorporelle utilise la capacité de conductivité du corps humain pour transmettre les ondes électromagnétiques porteuses de communications sans fil. Une telle technologie est appelée IBC (pour « Intra-Body Communication » en anglais).

Un tel système de communication sans fil est par exemple décrit dans le document WO2012/131224. Le système comprend un terminal porté par un utilisateur, dont l'antenne est directement en contact avec, ou très proche, de l'utilisateur. Un signal émis par le terminal est modulé au moyen d'un modulateur basse fréquence et transmis à travers le corps de l'utilisateur. Il est en effet connu que le corps humain présente des capacités de conduction adaptées pour véhiculer de tels signaux électromagnétiques dès lors que l'antenne est située à proximité (à moins de quelques centimètres) du corps de l'utilisateur et conçue de manière à rendre l'objectif attendu. L'antenne est constituée à cet effet d'un ensemble de spires en nombre et disposition adéquats pour émettre de façon optimale l'onde à travers le corps humain. Ce système selon l'état de l'art comporte aussi un dispositif de communication NFC comprenant un récepteur qui comprend une surface sensitive constituée d'une antenne de même type que celle de l'émetteur et sur laquelle l'utilisateur peut effectuer un geste de rapprochement, par exemple poser la main sur l'antenne, l'effleurer ou ne faire que rapprocher la main de l'antenne à quelques centimètres de celle-ci. Le dispositif de communication NFC reçoit le signal du fait du contact physique, ou du moins de la proximité, de l'utilisateur avec l'antenne. Le signal reçu est démodulé et transmis à un équipement adapté pour effectuer des traitements, en l'espèce pour mettre en œuvre la transaction (paiement, ouverture de porte, etc.)

Afin de sécuriser ce type de transaction, il est proposé dans le document WO2016/001506 de détecter et valider un geste de rapprochement volontaire de l'utilisateur, afin de s'assurer que le geste d'approche est réellement effectué. Une telle technique est également décrite dans le document WO 2019/063902. L'inconvénient d'un tel système réside dans le fait qu'en présence de plusieurs dispositifs de communication situés à proximité du terminal de l'utilisateur, même si l'utilisateur effectue un geste de rapprochement volontaire par rapport à un premier dispositif de communication, mais pas par rapport à un deuxième dispositif de communication, il se peut que la transaction échoue, dans le cas où le signal reçu par le terminal de l'utilisateur par communication intracorporelle, en provenance du deuxième dispositif de communication, a une puissance plus élevée que celle du signal caractérisant le geste de rapprochement volontaire de l'utilisateur, reçu par communication intracorporelle en provenance du premier dispositif.

En effet, c'est la trame contenue dans le signal émis par ce deuxième dispositif de communication qui sera décodée par le terminal de l'utilisateur et non la trame de données contenue dans le signal moins puissant caractérisant le geste de rapprochement de l'utilisateur, tel qu'émis par le premier dispositif de communication.

Ainsi, le terminal de l'utilisateur sera en mesure, via une application dédiée, de détecter le geste de rapprochement volontaire de l'utilisateur par rapport au premier dispositif de communication, par analyse de l'évolution de l'enveloppe du signal NFC reçu, mais risque d'associer cette enveloppe de façon erronée à une approche du deuxième dispositif de communication en lien avec le décodage des trames reçues en provenance de ce dernier.

La transaction entre le terminal et le premier dispositif de communication ne pourra donc pas aboutir.

### Objet et résumé de l'invention

Un des buts de l'invention est de remédier à des inconvénients de l'état de la technique précité.

A cet effet, un objet de la présente invention concerne un procédé de réception de signal au cours d'une communication intracorporelle via un utilisateur porteur d'un terminal, comprenant ce qui suit, au niveau du terminal :
- recevoir en provenance d'un dispositif de communication un signal caractérisant que l'utilisateur a effectué un geste de rapprochement avec le dispositif entre deux instants,
- détecter dans le signal reçu une première trame de données radio générée entre les deux instants, ladite première trame étant à la même fréquence que celle du signal reçu,

Un tel procédé est remarquable en ce qu'il comprend ce qui suit, au niveau du terminal :
- détecter dans le signal reçu une deuxième trame de données radio générée entre les deux instants, ladite deuxième trame étant à une fréquence différente de celle du signal reçu,
- comparer la première trame à la deuxième trame,
- valider une transaction en fonction de la présence ou non d'une information commune aux première et deuxième trames comparées.

Un tel procédé de réception selon l'invention permet au terminal porté par l'utilisateur d'établir une corrélation entre la première trame radio du signal reçu, caractérisant qu'un geste de rapprochement de l'utilisateur avec le dispositif a été effectué entre deux instants, et la deuxième trame radio reçue à une fréquence différente de ce signal, pour en déduire que des informations de validation de la transaction à établir lui sont communiquées par le dispositif en lien avec le geste de rapprochement.

Le procédé de réception selon l'invention permet ainsi au terminal porté par l'utilisateur de vérifier, parmi les trames de données qu'il reçoit via la communication intracorporelle, en provenance de plusieurs dispositifs de communication situés à proximité du terminal, si un de ces dispositifs a été ou non approché (ou encore touché) par l'utilisateur pour réaliser une transaction, et de valider une transaction, via le dispositif de communication que l'utilisateur a effectivement approché ou touché, en déterminant au moins une information commune aux première et deuxième trames ou bien, au contraire, de refuser la transaction, dans le cas où le terminal ne détermine aucune information en commun entre les première et deuxième trames.

L'invention permet ainsi de façon très simple, en modifiant un signal classique caractérisant que l'utilisateur a effectué un geste de rapprochement, par ajout de la deuxième trame de données radio, de vérifier par un terminal porté par l'utilisateur, quel est le dispositif qui a été effectivement approché ou touché par l'utilisateur du terminal pour mettre en œuvre une transaction. En outre, en corrélant cette information commune proche temporellement de l'intervalle temporel compris entre les deux instants qui caractérise que l'utilisateur a approché ou touché le dispositif, le terminal est en mesure de reconnaître avec une bonne probabilité, quel est, parmi les dispositifs de communication qui se trouvent à proximité du terminal, le dispositif de communication via lequel une transaction doit être établie.

On entend par communication intracorporelle une communication qui utilise la capacité de conductivité du corps humain pour transmettre les ondes électromagnétiques porteuses de communications sans fil. Une telle technologie est appelée IBC.

Selon un mode de réalisation particulier, ladite au moins une information commune aux première et deuxième trames est un identifiant ou une information de localisation du dispositif de communication.

Grâce au fait que les première et deuxième trames radio contenant l'information commune ont été générées en parallèle entre les deux instants correspondant à l'intervalle temporel pendant lequel l'utilisateur a approché ou touché un dispositif de communication, le terminal est en mesure de corréler, très simplement et sans nécessiter des ressources calculatoires complexes, l'identité ou la localisation du dispositif qui a été effectivement approché ou touché.

Selon un autre mode de réalisation particulier, l'information commune est représentée sous forme binaire.

La représentation sous forme binaire de l'information déterminant que l'utilisateur a approché ou touché le dispositif ou non permet de réduire le coût de signalisation de la transmission des trames de données radio entre le dispositif de communication et le terminal.

Selon un autre mode de réalisation particulier, la deuxième trame est détectée plusieurs fois entre les deux instants.

Une telle disposition permet au terminal de mettre en œuvre plusieurs comparaisons entre une première trame radio et une deuxième trame radio, de manière à distinguer avec la meilleure probabilité possible quel est le dispositif qui a été effectivement touché ou approché par l'utilisateur.

Selon un autre mode de réalisation particulier, la deuxième trame est détectée une fois entre les deux instants et est représentative qu'entre les deux instants, l'utilisateur a touché le dispositif de communication.

Une telle disposition correspond à un mode de réalisation pour lequel l'utilisateur doit toucher le dispositif de communication pour mettre en œuvre une transaction et non pas simplement approcher le dispositif.

Les différents modes ou caractéristiques de réalisation précités peuvent être ajoutés indépendamment ou en combinaison les uns avec les autres, au procédé de réception défini ci-dessus.

L'invention concerne également un terminal ayant des capacités de communication intracorporelle via un utilisateur porteur dudit terminal, ledit terminal comprenant un processeur qui est configuré pour mettre en œuvre ce qui suit :
- recevoir en provenance d'un dispositif de communication un signal caractérisant que l'utilisateur a effectué un geste de rapprochement avec le dispositif, entre deux instants,
- détecter dans le signal reçu une première trame de données radio générée entre les deux instants, ladite première trame étant à la même fréquence que celle du signal reçu.

Un tel terminal est remarquable en ce que le processeur est configuré pour mettre en œuvre ce qui suit :
- détecter dans le signal reçu une deuxième trame de données radio générée entre les deux instants, ladite deuxième trame étant à une fréquence différente de celle du signal reçu,
- comparer la première trame à la deuxième trame,
- valider une transaction en fonction de la présence ou non d'une information commune aux première et deuxième trames comparées.

Un tel terminal de communication est notamment apte à mettre en œuvre le procédé de réception précité.

L'invention concerne également un procédé d'émission de signal au cours d'une communication intracorporelle via un utilisateur porteur d'un terminal, comprenant ce qui suit, au niveau d'un dispositif de communication :
- détecter un geste de rapprochement de l'utilisateur avec le dispositif de communication, ledit geste étant effectué entre deux instants,
- émettre vers le terminal un signal caractérisant le geste de rapprochement, ledit signal contenant une première trame de données radio générée entre les deux instants, ladite première trame étant à la même fréquence que celle du signal émis. Un tel procédé d'émission est remarquable en ce que le signal émis comprend en outre une deuxième trame de données radio générée entre les deux instants, la deuxième trame étant à une fréquence différente de celle du signal émis.

Selon un mode de réalisation particulier, ladite au moins une information commune aux première et deuxième trames est un identifiant ou une information de localisation du dispositif de communication.

Selon un autre mode de réalisation particulier, l'information commune est représentée sous forme binaire.

Selon un autre mode de réalisation particulier, la deuxième trame est générée plusieurs fois entre les deux instants.

Selon un autre mode de réalisation particulier, la deuxième trame est générée une fois entre les deux instants et est représentative qu'entre les deux instants, l'utilisateur a touché le dispositif de communication.

Les différents modes ou caractéristiques de réalisation précités peuvent être ajoutés indépendamment ou en combinaison les uns avec les autres, au procédé d'émission défini ci-dessus.

L'invention concerne également un dispositif de communication ayant des capacités d'émission de signal au cours d'une communication intracorporelle via un utilisateur porteur d'un terminal, ledit dispositif comprenant un processeur qui est configuré pour mettre en œuvre ce qui suit :
- détecter un geste de rapprochement de l'utilisateur avec le dispositif de communication, ledit geste étant effectué entre deux instants,
- émettre vers le terminal un signal caractérisant le geste de rapprochement, ledit signal contenant une première trame de données radio générée entre les deux instants, ladite première trame étant à la même fréquence que celle du signal émis. Un tel dispositif est remarquable en ce que le signal émis comprend en outre une deuxième trame de données radio générée entre les deux instants, la deuxième trame étant à une fréquence différente de celle du signal émis.

Un tel dispositif est notamment apte à mettre en œuvre le procédé d'émission précité.

L'invention concerne encore un programme d'ordinateur comportant des instructions pour la mise en œuvre du procédé de réception ou d'émission selon l'invention, selon l'un quelconque des modes particuliers de réalisation décrits précédemment, lorsque ledit programme est exécuté par un processeur.

De telles instructions peuvent être stockées durablement dans un support mémoire non transitoire du terminal de communication mettant en œuvre le procédé de réception ou du dispositif de communication mettant en œuvre le procédé d'émission.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de réception ou d'émission précité.

### Brève description des dessins

D'autres caractéristiques et avantages apparaîtront à la lecture de modes de réalisation particuliers de l'invention, donnés à titre d'exemples illustratifs et non limitatifs, et des dessins annexés, parmi lesquels :
[Fig. 1] la figure 1 représente un système de communication selon un mode de réalisation de l'invention lorsqu'un terminal porté par un utilisateur réalise une transaction avec un dispositif de communication, dans un mode de réalisation particulier de l'invention,
[Fig. 2] la figure 2 représente un terminal dans un mode de réalisation particulier de l'invention,
[Fig. 3] la figure 3 représente un dispositif de communication dans un mode de réalisation particulier de l'invention,
[Fig. 4] la figure 4 représente les principales actions mises en œuvre dans le procédé d'émission/réception de signal, selon un mode de réalisation particulier de l'invention,
[Fig.5] la figure 5 représente un mode de réalisation d'un signal représentatif d'un geste de rapprochement d'un utilisateur avec un dispositif de communication selon l'invention.

### Description détaillé d'un mode de réalisation de l'invention

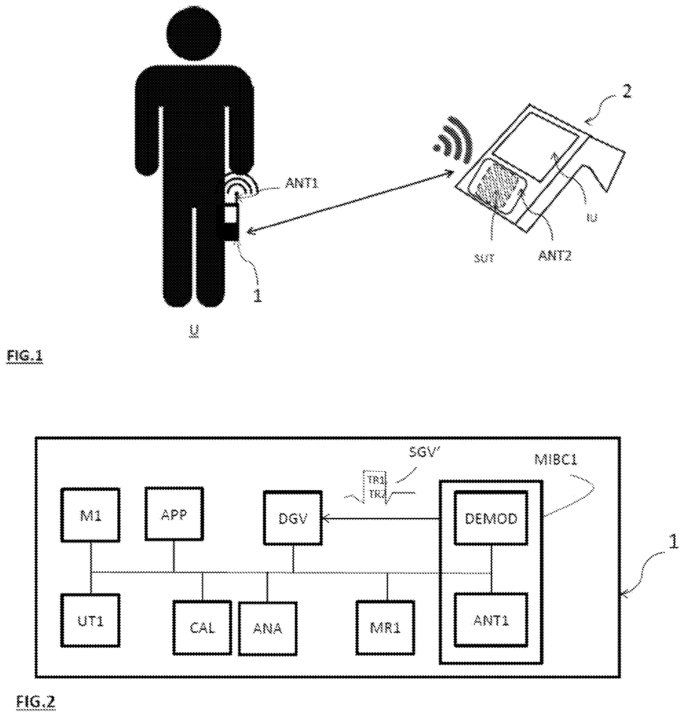

La figure 1 représente un système de communication sans fil selon un mode de réalisation de l'invention.

Un tel système comprend :
- un terminal 1 porté par un utilisateur U, le terminal 1 étant équipé d'un module NFC-IBC (non représenté) et d'une antenne IBC désignée par la référence ANT1,
- un dispositif de communication 2, tel que par exemple une station de base, ou borne, équipé d'un module NFC.

Le terminal 1 selon l'invention est adapté pour émettre et recevoir des signaux radioélectriques, que l'on appelle aussi ondes porteuses radio, via l'antenne ANT1, à travers le corps d'un utilisateur U. A cette fin, le terminal 1 est situé à proximité de l'utilisateur U, sans nécessairement être en contact direct avec celui-ci. Par exemple, le terminal 1 est placé à l'intérieur d'une poche ou d'un sac porté contre l'utilisateur. Dans ces configurations, on estime que le terminal 1 n'est pas éloigné de plus de quelques centimètres du corps de l'utilisateur U. La distance est par exemple inférieure à 10 cm. Le terminal 1 est équipé d'une batterie ou de piles, pour un fonctionnement autonome. Il s'agit par exemple d'un téléphone mobile équipé d'une antenne NFC utilisée comme antenne pour émettre et recevoir les signaux électriques modulés ou non modulés. Dans le contexte de cet exemple de réalisation, et comme déjà expliqué auparavant, l'antenne NFC ANT1 est également IBC. A cet effet, l'antenne ANT1 est conçue de manière à recevoir de façon optimale l'onde électromagnétique à travers le corps humain. Pour se faire, elle est constituée d'un ensemble de spires en nombre et disposition adéquats.

Le terminal 1 peut bien sûr prendre d'autres formes. Par exemple il peut s'agir de tout dispositif portable apte à communiquer en champ proche avec des émetteurs NFC, directement ou via le corps humain (bracelet, tablette électronique, collier, etc.).

Le dispositif de communication 2 est un équipement apte à émettre et recevoir des signaux radioélectriques, ou ondes porteuses, notamment à travers le corps de l'utilisateur U, via une antenne IBC désignée par la référence ANT2. Dans cet exemple de réalisation, le dispositif de communication 2 est un lecteur qui comprend une surface sensitive constituée par l'antenne ANT2 éventuellement protégée et adaptée pour réagir lorsque l'utilisateur approche de quelques centimètres de l'antenne ANT2, par exemple en posant la main au-dessus de l'antenne ANT2. Ainsi, lorsque l'utilisateur U approche de l'antenne ANT2, avec la main par exemple, un signal électrique modulé émis ou reçu via l'antenne ANT2 est apte à être véhiculé par le corps de l'utilisateur U. L'antenne ANT2 peut en outre comprendre une surface sensitive SUT, représentée en pointillé sur la figure 2, qui est adaptée pour réagir lorsque l'utilisateur la touche, par exemple en posant la main dessus. Ainsi, lorsque l'utilisateur U touche la surface sensitive SUT, avec la main par exemple, un signal électrique modulé émis ou reçu via l'antenne ANT2 est apte à être véhiculé par le corps de l'utilisateur U. Selon un exemple de réalisation, la surface sensitive SUT peut être munie d'un ou de plusieurs détecteurs capacitifs (non représentés). D'autres technologies de détection du toucher peuvent bien sûr être mises en œuvre, telles que par exemple la technologie à onde de surface, la technologie à infra-rouge, etc... Le dispositif de communication 2 comprend aussi une interface utilisateur (aussi appelée IHM) référencée IU, destinée à afficher des messages à l'attention de l'utilisateur et un équipement (non représenté sur la figure 1) apte à effectuer des traitements, tel un PC ou un serveur. L'antenne ANT2 (dans le cas où un rapprochement suffit) ou bien la surface sensitive SUT recouvrant l'antenne ANT2 (dans le cas où un toucher est exigé), l'interface utilisateur IU et l'équipement sont connectés par exemple au moyen d'une liaison filaire, ou à travers un réseau, par exemple un réseau mobile, ou le réseau Internet. Le dispositif de communication 2 est paramétré pour fonctionner en IBC par le chargement d'un programme (logiciel) spécifique, sans modification du hardware.

Selon un mode de réalisation alternatif, le dispositif de communication 2 consiste en une étiquette électronique de gondole (EEG) que l'utilisateur vient toucher afin de recevoir une information de personnalisation d'un produit (réduction, avantage, promotion, information sur le produit, etc.).

### Description d'un mode de réalisation du terminal 1

La figure 2 présente la structure simplifiée du terminal 1adapté pour mettre en œuvre le procédé de réception de signal qui va être décrit ci-dessous.

Le terminal 1 est par exemple un terminal mobile de type *smartphone* adapté pour mettre en œuvre l'invention. Selon un autre exemple, le terminal est une simple carte électronique équipée des modules suivants :
- une unité de traitement, telle un processeur ou « CPU » (pour « Central Processing Unit »), référencée UT1, destinée à charger des instructions en mémoire, à les exécuter, à effectuer des opérations,
- un ensemble M1 de mémoires, dont une mémoire volatile, ou "RAM" (pour "Random Access Memory") utilisée pour exécuter des instructions de code, stocker des variables, etc., et dont une mémoire non volatile de type « ROM » (de l'anglais « Read Only Memory »), ou «EEPROM » (pour « Electronically Erasable Programmable Read Only Memory ») destinée à contenir des informations persistantes, notamment les données d'identification de l'utilisateur UT,
- un module IBC référencé MIBC1, incluant:
   - une antenne ANT1 adaptée notamment pour recevoir des signaux sur la voie radio et via le corps humain, de manière à ce qu'un signal électrique modulé transporté par le corps de l'utilisateur soit apte à être reçu par l'antenne, qui se trouve dans le terminal, en proximité avec le corps humain ;
   - un démodulateur DEMOD, destiné à recevoir via l'antenne ANT1 un signal électrique modulé et à le transformer en un signal numérique destiné à être transmis à l'unité de traitement ;
   - les composantes logicielles (firmware, etc.) nécessaires à la mise en œuvre des communications IBC ;
- un module radio MR1 de type Bluetooth ou WiFi destiné à transmettre notamment des données en retour depuis le terminal 1 vers le dispositif 2 ou tout autre dispositif approprié,
- de préférence, et notamment si les modules suivants ne sont pas mis en œuvre sur un autre dispositif :
   - un module de détection de geste volontaire, référencé DGV, pour analyser les signaux reçus par le module MIBC1 et décider s'il s'agit ou non d'un signal SGV' correspondant à un mouvement comportant un geste volontaire de l'utilisateur U et modifié selon l'invention ;
   - un module d'analyse ANA pour analyser tout signal reçu en provenance du dispositif de communication 2, notamment suite à un mouvement volontaire de l'utilisateur, et détecter dans un intervalle temporel où l'amplitude du signal reçu est maximale, si le signal reçu comprend une première trame de données radio reçue à la même fréquence que le signal reçu et une deuxième trame de données radio reçue à une fréquence différente de celle de la première trame;
   - un module de calcul CAL pour comparer la première trame à la deuxième trame afin de détecter la présence ou non d'une information commune aux première et deuxième trames ;
   - un module applicatif APP pour, en fonction de la présence ou non de cette information commune, valider ou non la transaction adéquate requise par le terminal 1, soit avec le dispositif 2, soit avec tout autre dispositif/équipement approprié.

### Description d'un mode de réalisation du dispositif de communication 2

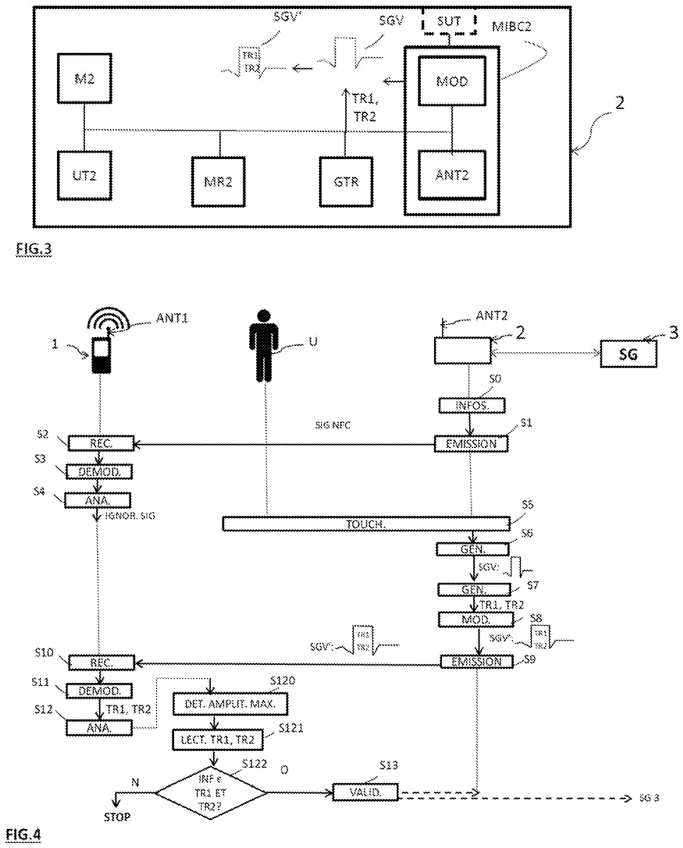

La figure 3 présente la structure simplifiée du dispositif de communication 2 adapté pour mettre en œuvre le procédé d'émission de signal qui va être décrit ci-dessous. Le dispositif 2 comprend plusieurs modules qui sont similaires à ceux du terminal 1 décrit en relation avec la figure 2 :
- une unité de traitement, telle un processeur ou CPU, référencée UT2, utilisée pour exécuter des instructions de code, stocker des variables, etc.,
- un ensemble M2 de mémoires, dont une mémoire volatile ou "RAM" (pour "Random Access Memory") utilisée pour exécuter des instructions de code, stocker des variables, etc., et une mémoire non volatile, de type « ROM » ou « EEPROM » destinée à contenir des informations persistantes,
- un module IBC référencé MIBC2, incluant :
   - une antenne ANT2 adaptée notamment pour émettre/recevoir des signaux sur la voie radio et via le corps humain et pour réagir à un geste de rapprochement de l'utilisateur U, par exemple en approchant la main juste au-dessus de l'antenne ANT2, ladite antenne ANT2 étant agencée de manière à coopérer avec l'unité de traitement UT2 pour mettre en œuvre les étapes du procédé d'émission de signal qui sera décrit ultérieurement ;
   - un modulateur MOD destiné à adapter un signal numérique produit par l'unité de traitement UT2 en un signal électrique modulé, destiné à être transmis, via l'antenne ANT2, à travers le corps de l'utilisateur. L'opération de modulation effectuée par le modulateur est par exemple une modulation d'amplitude : le signal est un signal de fréquence de par exemple 13,56 MHz, modulé en amplitude avec un taux de modulation d'environ 10% (caractéristique connue du type B selon la norme NFC). L'invention n'est cependant pas limitée à ce type de modulation. Dans un autre exemple de réalisation, la modulation est une modulation de fréquence, moins sensible aux parasites, ou, une modulation de phase ;
- dans le cas où le geste de rapprochement est un toucher, une surface tactile SUT adaptée pour réagir lorsque l'utilisateur U la touche (contact, effleurement, tapotement etc.). Dans l'exemple décrit ici, cette surface correspond à l'antenne, de manière à ce qu'un signal électrique modulé émis via l'antenne ANT2 soit apte à être véhiculé par le corps de l'utilisateur qui touche la surface SUT. Dans un exemple de réalisation, l'antenne peut être intégrée dans la surface. La surface est agencée de manière à coopérer avec l'unité de traitement UT2 pour mettre en œuvre les étapes du procédé d'émission de signal qui sera décrit ultérieurement ;
- un module radio MR2 de type Bluetooth ou Wi-Fi destiné notamment à recevoir des données en retour depuis le terminal 1 (signaux reçus par le terminal 1, données relatives à la transaction, etc.) et/ou à rentrer en contact avec un autre dispositif pour valider la transaction (porte, objet connecté, etc.),
- les composantes logicielles (firmware, etc.) nécessaires à la mise en œuvre des communications IBC,
- optionnellement une interface utilisateur (IHM) adaptée pour transmettre à l'utilisateur U des instructions ou des messages d'information. Par exemple, l'interface utilisateur est un écran sur lequel les messages et instructions sont affichés. Dans un autre exemple de réalisation, l'interface est une interface audio permettant de jouer les messages et instructions, par exemple pour signifier à l'utilisateur qu'il peut retirer sa main de la surface. L'interface peut aussi comporter un clavier, un micro, etc.
- et notamment si les modules suivants ne sont pas présents sur un autre dispositif, un module GTR de génération de trames pour générer une première trame de données radio TR1 à la même fréquence que le signal modulé et une deuxième trame de données radio TR2 à une fréquence différente de celle de la première trame, fournissant un signal SGV' correspondant à un mouvement comportant un geste volontaire de l'utilisateur U tel que modifié selon l'invention.

On rappelle que n'importe quel lecteur du commerce (par exemple un TPE pour « terminal de paiement électronique ») peut avantageusement être utilisé en tant que dispositif de communication 2, à condition de bénéficier du module MIBC2 et éventuellement de disposer d'une surface tactile dans le cas où la transaction requiert de toucher le dispositif 2, et, après une simple mise à jour du logiciel du lecteur (installation et/ou mise à jour de l'application et paramétrage de l'émission NFC) pour le rendre apte à émettre un message possédant les caractéristiques (fréquence, modulation, etc.) IBC via son antenne.

### Description d'un mode de réalisation d'un procédé de communication intracorporelle sans fil bidirectionnelle

En référence à la figure 4, on décrit maintenant le déroulement d'un procédé de communication sans fil bidirectionnelle à travers le corps humain d'un utilisateur U, entre le terminal 1 précité et le dispositif de communication 2 précité, selon un mode de réalisation de l'invention.

Dans une étape initiale S0, en réponse à l'approche de l'utilisateur U du dispositif 2, le dispositif 2 restitue des informations à l'utilisateur U. Selon un exemple de réalisation particulier, il peut s'agir d'un message d'information tel que par exemple : « pour valider le montant de la transaction, veuillez approcher la main de l'antenne ANT2/ toucher la surface tactile SUT », « pour valider l'accès à la bibliothèque, veuillez approcher la main de l'antenne ANT2/ toucher la surface tactile SUT », etc....Un tel message d'informations peut être restitué textuellement et/ou vocalement.

Le procédé se déroule alors comme suit :
En S1, le dispositif 2 émet via son antenne ANT2 un signal électrique modulé de type NFC associé à un message de recherche destiné à un dispositif situé à proximité du dispositif 2, en l'espèce le terminal 1 porté par l'utilisateur U. Un tel signal, désigné par la référence SIG sur la figure 4, contient classiquement une trame de données par défaut ainsi qu'une charge utile contenant par exemple un nombre aléatoire, un code, une clé, etc... Cette trame constitue un message de recherche transmis dans le signal SIG émis par le dispositif 2 qui est destiné selon cet exemple à entrer en contact avec un dispositif portatif situé à proximité du dispositif 2. Il est propre au service de transaction proposé : paiement, accès à un local, etc....

Le signal SIG peut être émis en continu pendant une durée prédéfinie.

Au terme de cette durée d'émission, le dispositif 2 passe en mode réception.

En S2, le signal SIG émis en S1 est détecté et reçu par le terminal 1.

En S3, le terminal 1 démodule le signal SIG reçu en un signal numérique.

En S4, le terminal 1 analyse, via le module ANA de la figure 2, le signal numérique ainsi obtenu. Au cours de cette analyse, le terminal 1 détecte au moins un des éléments d'information correspondant à l'interrogation du dispositif 2, à savoir dans cet exemple un service utilisant la technologie IBC. L'application APP ne détectant pas à ce stade d'informations relatives à un geste volontaire de l'utilisateur U par rapport au dispositif 2, le signal SIG est ignoré par le terminal 1.

Le procédé selon l'invention se déroule alors comme suit :
En S5, l'utilisateur U touche la surface sensible SUT du dispositif 2, par exemple en posant la main sur celle-ci, ou bien s'approche de l'antenne ANT2 du dispositif 2, par exemple à l'aide de la main.

En S6, le dispositif 2 génère un signal électrique SGV représentatif du geste volontaire de l'utilisateur U.

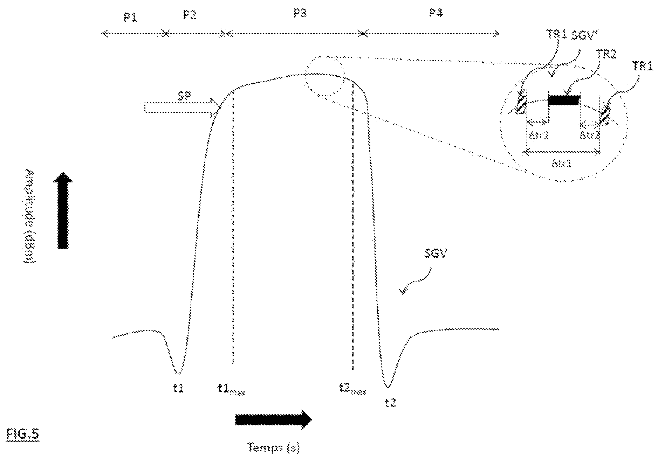

Sur la figure 5, le signal SGV comprend :
- une première portion P1 caractérisant le fait que l'utilisateur U n'a pas encore approché l'antenne ANT2/touché la surface tactile SUT du dispositif 2. A cet effet, la puissance ou l'amplitude du signal SGV est faible, par exemple de l'ordre de -70dB ;
- une deuxième portion P2 caractérisant le fait que l'utilisateur U a approché l'antenne ANT2/touché la surface tactile SUT du dispositif 2. A cet effet, le signal SGV augmente brutalement jusqu'à atteindre une amplitude de l'ordre par exemple de -50 dB, à un instant t1ₘₐₓ ;
- une troisième portion P3 caractérisant la durée pendant laquelle l'utilisateur U conserve la main au-dessus de l'antenne ANT2/ reste en contact avec la surface tactile SUT du dispositif 2. A cet effet, le signal SGV atteint une amplitude maximale de l'ordre de -50 dB jusqu'à un instant t2ₘₐₓ ;
- une quatrième portion P4 caractérisant le fait qu'à t2ₘₐₓ, l'utilisateur U a éloigné la main du dispositif 2. A cet effet, le signal SGV diminue brutalement jusqu'à atteindre une amplitude de l'ordre de -70 dB.

En référence à nouveau à la figure 4, s'il y a eu rapprochement ou toucher, le module GTR du dispositif 2 génère en S7 :
-- une première trame de données radio TR1 de validation du geste de l'utilisateur U qui comprend une information INF caractérisant par exemple le dispositif 2,
-- une deuxième trame de données radio TR2 de validation du geste de l'utilisateur U qui comprend l'information INF.

D'autres informations peuvent être contenues dans la trame de données TR1, telles que par exemple un identifiant de service et/ou encore une donnée aléatoire.

A titre d'exemple non exhaustif, une telle information INF est codée sur un ou plusieurs bits. Bien entendu, l'information INF pourrait se présenter sous une forme textuelle, alphanumérique, etc...

Selon un exemple de réalisation, l'information INF est un identifiant du dispositif 2. A titre d'alternative, l'information INF est une adresse de localisation (coordonnées GPS, adresse URL, etc...) du dispositif 2.

D'autres informations peuvent être contenues dans la trame de données TR1, telles que par exemple un identifiant de service et/ou encore une donnée aléatoire.

S'il n'y a pas eu rapprochement ou toucher, le module GTR du dispositif 2 génère en S7 :
-- la première trame de données radio TR1 de validation du geste de l'utilisateur U qui a été décrite ci-dessus,
-- une deuxième trame de données radio TR2 de non validation du geste de l'utilisateur U qui comprend une information INF' différente de l'information INF, par exemple une information INF' contenant un code d'erreur sur par exemple un ou plusieurs bits. Bien entendu, l'information INF' pourrait se présenter sous une forme textuelle, alphanumérique, etc...

En S8, le dispositif 2 module, via son module MOD (fig.3), le signal SGV en lui associant, entre les instants t1ₘₐₓ et t2ₘₐₓ, les trames TR1 et TR2, fournissant un signal SGV'.

En S9, le dispositif 2 émet via son antenne ANT2 un signal électrique modulé SGV' de validation ou de non validation du geste de l'utilisateur U, destiné au terminal 1 porté par l'utilisateur U, ledit signal étant associé, entre les instants t1ₘₐₓ et t2ₘₐₓ, aux première et deuxième trames TR1 et TR2 générées en S7. La trame TR1 est transmise à la même fréquence que celle du signal SGV', c'est-à-dire par exemple 13,56 MHz, tandis que la trame TR2 est transmise à une fréquence différente de celle du signal SGV'. Une telle fréquence différente est par exemple de l'ordre de quelques kHz, par exemple 5 kHz.

Selon un mode de réalisation, une seule trame TR2 est transmise entre les instants t1ₘₐₓ et t2ₘₐₓ, à la suite d'une trame TR1.

A titre d'alternative, comme représenté sur la figure 5, une seule trame TR2 est transmise entre deux trames TR1, dans l'intervalle temporel t1ₘₐₓ, t2ₘₐₓ. Dans l'exemple représenté, les deux trames TR1 sont séparées par un intervalle temporel Δtr1 égal par exemple à 10ms, tandis que la trame TR2 est espacée de deux trames TR1 successives, d'un même intervalle temporel Δtr2 égal par exemple à 6,2 µs. Une seule trame TR2 est transmise par exemple dans le cas où le dispositif 2 est doté de la surface tactile SUT, au moment où l'utilisateur U touche la surface SUT du dispositif 2.

Selon un autre mode de réalisation, entre les instants t1ₘₐₓ et t2ₘₐₓ, la trame TR2 peut être envoyée en continu, tout comme la trame TR1, que le dispositif 2 soit doté ou pas d'une surface tactile SUT.

En S10, le signal électrique modulé SGV' émis en S9 est détecté et reçu par le terminal 1, via le corps de l'utilisateur U, en passant par l'antenne ANT1.

En S11, le terminal 1 démodule le signal électrique SGV' reçu en un signal numérique, via son module DEMOD (fig.2). A cet effet, le terminal 1 démodule à la fréquence 13,56 MHz le signal électrique modulé SGV' en la première trame de données TR1. Egalement en S10, le terminal 1 démodule à la fréquence 5 kHz le signal électrique modulé SGV' en la deuxième trame de données TR2.

En S12, via son module DGV (fig.2), le terminal 1 analyse le signal numérique ainsi obtenu afin de valider si le geste de l'utilisateur U correspond ou non à un geste volontaire de la part de ce dernier et si l'antenne ANT2 du dispositif 2 a été approchée ou non par l'utilisateur U ou bien si la surface tactile SUT du dispositif 2 a été touchée ou non par l'utilisateur U, dans le cas où le dispositif 2 est doté d'une telle surface.

Au cours de cette analyse, le terminal 1 détecte en S120 que l'amplitude du signal SGV' est maximale entre les instants t1ₘₐₓ et t2ₘₐₓ et que le signal SGV' a dépassé un seuil prédéterminé SP entre ces deux instants. Une première condition selon laquelle le signal SGV' est représentatif d'un geste de rapprochement de l'utilisateur U avec le dispositif 2 est donc remplie.

En S121, à partir de la première trame TR1, le terminal 1 détecte l'information INF, et éventuellement les autres informations précitées, telles que par exemple un identifiant de service et/ou encore une donnée aléatoire. Egalement en S121, ou dans une étape simultanée à S121, à partir de la deuxième trame TR2, le terminal 1 détecte l'information INF ou l'information INF' précitée.

En S123, e terminal 1 compare les trames TR1 et TR2, via le module CAL de la figure 2.

Si l'information INF est présente à la fois dans la trame TR1 et dans la trame TR2, la condition supplémentaire de validation du geste de rapprochement volontaire de l'utilisateur U est remplie. Ainsi, le terminal 1 peut avantageusement vérifier si la trame TR2 résultant de la surmodulation de l'enveloppe du signal SGV' reçu en S9 est associée ou non au contenu de la trame TR1 reçue.

En S13, le terminal 1 valide alors de façon classique le contenu de la trame TR1 et entre alors en communication soit avec le dispositif 2 si ce dernier a des capacités de gestion suffisante ou bien avec le système de gestion SG3 ou tout autre équipement de gestion approprié, pour activer le service requis par le terminal 1 (valider le montant d'une transaction, valider l'accès à un local, valider un solde de tickets de transport, etc...).

Si l'information INF n'est présente que dans la trame TR1, la condition supplémentaire de validation du geste de rapprochement volontaire de l'utilisateur U n'est pas remplie. Le terminal 1 ne poursuit donc pas la transaction.

## Revendications

1. Procédé de réception de signal au cours d'une communication intracorporelle via un utilisateur (U) porteur d'un terminal (1), comprenant ce qui suit, au niveau du terminal :
- recevoir (S10) en provenance d'un dispositif de communication (2) un signal caractérisant que l'utilisateur a effectué un geste de rapprochement avec le dispositif entre deux instants,
- détecter (S121) dans le signal reçu une première trame de données radio générée entre les deux instants, ladite première trame étant à la même fréquence que celle du signal reçu,
**caractérisé en ce qu'**il comprend ce qui suit au niveau du terminal :
- détecter (S121) dans le signal reçu une deuxième trame de données radio générée entre les deux instants, ladite deuxième trame étant à une fréquence différente de celle du signal reçu,
- comparer (S122) la première trame à la deuxième trame,
- valider (S13) une transaction en fonction de la présence ou non d'une information (INF) commune aux première et deuxième trames comparées.

2. Procédé de réception selon la revendication 1, dans lequel ladite au moins une information (INF) commune aux première et deuxième trames est un identifiant ou une information de localisation du dispositif de communication.

3. Procédé de réception selon la revendication 1 ou la revendication 2, dans lequel l'information commune (INF) est représentée sous forme binaire.

4. Procédé de réception selon l'une quelconque des revendications précédentes, dans lequel la deuxième trame est détectée plusieurs fois entre les deux instants.

5. Procédé de réception selon l'une quelconque des revendications précédentes, dans lequel la deuxième trame est détectée une fois entre les deux instants et est représentative qu'entre les deux instants, l'utilisateur a touché le dispositif de communication.

6. Terminal (1) ayant des capacités de communication intracorporelle via un utilisateur porteur dudit terminal, ledit terminal étant configuré pour mettre en œuvre ce qui suit :
- recevoir en provenance d'un dispositif de communication un signal caractérisant que l'utilisateur a effectué un geste de rapprochement avec le dispositif, entre deux instants,
- détecter dans le signal reçu une première trame de données radio générée entre les deux instants, ladite première trame étant à la même fréquence que celle du signal reçu,
ledit terminal étant **caractérisé en ce qu'**il est en outre configuré pour mettre en œuvre ce qui suit :
- détecter dans le signal reçu une deuxième trame de données radio générée entre les deux instants, ladite deuxième trame étant à une fréquence différente de celle du signal reçu,
- comparer la première trame à la deuxième trame,
- valider une transaction en fonction de la présence ou non d'une information commune aux première et deuxième trames comparées.

7. Programme d'ordinateur comportant des instructions de code de programme pour la mise en œuvre du procédé de réception de signal selon l'une quelconque des revendications 1 à 5 au cours d'une communication intracorporelle via un utilisateur (U) porteur d'un terminal (1), selon la revendication 6, lorsqu'il est exécuté sur ledit terminal.

8. Support d'informations lisible par un ordinateur, et comportant des instructions d'un programme d'ordinateur selon la revendication 7.

9. Procédé d'émission de signal au cours d'une communication intracorporelle via un utilisateur (U) porteur d'un terminal (1), comprenant ce qui suit, au niveau d'un dispositif de communication (2) :
- détecter (S5) un geste de rapprochement de l'utilisateur (U) avec le dispositif de communication (2), ledit geste étant effectué entre deux instants,
- émettre (S9) vers le terminal un signal caractérisant le geste de
rapprochement, ledit signal contenant une première trame de données radio générée entre les deux instants, ladite première trame étant à la même fréquence que celle du signal émis,
**caractérisé en ce que** ledit signal émis comprend en outre une deuxième trame de données radio générée entre les deux instants, ladite deuxième trame étant à une fréquence différente de celle du signal émis.

10. Procédé d'émission selon la revendication 9, dans lequel ladite au moins une information commune aux première et deuxième trames est un identifiant ou une information de localisation du dispositif de communication.

11. Procédé d'émission selon la revendication 9 ou la revendication 10, dans lequel l'information commune est représentée sous forme binaire.

12. Procédé d'émission selon les revendications précédentes, dans lequel la deuxième trame est générée plusieurs fois entre les deux instants.

13. Procédé d'émission selon les revendications précédentes, dans lequel la deuxième trame est générée une fois entre les deux instants et est représentative qu'entre les deux instants, l'utilisateur a touché le dispositif de communication.

14. Dispositif de communication (2) ayant des capacités d'émission de signal au cours d'une communication intracorporelle via un utilisateur porteur d'un terminal, ledit dispositif étant configuré pour mettre en œuvre ce qui suit :
- détecter un geste de rapprochement de l'utilisateur avec le dispositif de communication, ledit geste étant effectué entre deux instants,
- émettre vers le terminal un signal caractérisant le geste de rapprochement, ledit signal contenant une première trame de données radio générée entre les deux instants, ladite première trame étant à la même fréquence que celle du signal émis, ledit dispositif étant **caractérisé en ce que** ledit signal émis comprend en outre une deuxième trame de données radio générée entre les deux instants, ladite deuxième trame étant à une fréquence différente de celle du signal émis.

15. Programme d'ordinateur comportant des instructions de code de programme pour la mise en œuvre du procédé d'émission de signal au cours d'une communication intracorporelle via un utilisateur (U) porteur d'un terminal (1) selon l'une quelconque des revendications 9 à 13, lorsqu'il est exécuté sur un dispositif de communication selon la revendication 14**.**

## Patentansprüche

1. Verfahren zum Empfang eines Signals im Verlauf einer intrakorporalen Kommunikation über einen Benutzer (U) als Träger eines Endgeräts (1), das Folgendes am Endgerät umfasst:
- Empfangen (S10) eines Signals, das charakterisiert, dass der Benutzer zwischen zwei Zeitpunkten eine Bewegung der Annäherung an die Vorrichtung durchgeführt hat, von einer Kommunikationsvorrichtung (2),
- Erkennen (S121) eines ersten Funkdatenrahmens, der zwischen den beiden Zeitpunkten erzeugt wird, im empfangenen Signal, wobei der erste Rahmen die gleiche Frequenz aufweist wie diejenige des empfangenen Signals, **dadurch gekennzeichnet, dass** es Folgendes am Endgerät umfasst:
- Erkennen (S121) eines zweiten Funkdatenrahmens, der zwischen den beiden Zeitpunkten erzeugt wird, im empfangenen Signal, wobei der zweite Rahmen eine andere Frequenz aufweist als diejenige des empfangenen Signals,
- Vergleichen (S122) des ersten Rahmens mit dem zweiten Rahmen,
- Validieren (S13) einer Transaktion abhängig vom Vorhandensein oder Fehlen einer Information (INF), die dem verglichenen ersten und zweiten Rahmen gemeinsam ist.

2. Verfahren zum Empfang nach Anspruch 1, wobei die mindestens eine Information (INF), die dem ersten und zweiten Rahmen gemeinsam ist, eine Kennung oder eine Standortinformation der Kommunikationsvorrichtung ist.

3. Verfahren zum Empfang nach Anspruch 1 oder Anspruch 2, wobei die gemeinsame Information (INF) in binärer Form dargestellt ist.

4. Verfahren zum Empfang nach einem der vorhergehenden Ansprüche, wobei der zweite Rahmen zwischen den beiden Zeitpunkten mehrmals erkannt wird.

5. Verfahren zum Empfang nach einem der vorhergehenden Ansprüche, wobei der zweite Rahmen zwischen den beiden Zeitpunkten einmal erkannt wird und repräsentativ dafür ist, dass der Benutzer zwischen den beiden Zeitpunkten die Kommunikationsvorrichtung berührt hat.

6. Endgerät (1), das Fähigkeiten zur intrakorporalen Kommunikation über einen Benutzer als Träger des Endgeräts aufweist, wobei das Endgerät dazu konfiguriert ist, Folgendes durchzuführen:
- Empfangen eines Signals, das charakterisiert, dass der Benutzer zwischen zwei Zeitpunkten eine Bewegung der Annäherung an die Vorrichtung durchgeführt hat, von einer Kommunikationsvorrichtung,
- Erkennen eines ersten Funkdatenrahmens, der zwischen den beiden Zeitpunkten erzeugt wird, im empfangenen Signal, wobei der erste Rahmen die gleiche Frequenz aufweist wie diejenige des empfangenen Signals, wobei das Endgerät **dadurch gekennzeichnet ist, dass** es außerdem dazu konfiguriert ist, Folgendes durchzuführen:
- Erkennen eines zweiten Funkdatenrahmens, der zwischen den beiden Zeitpunkten erzeugt wird, im empfangenen Signal, wobei der zweite Rahmen eine andere Frequenz aufweist als diejenige des empfangenen Signals,
- Vergleichen des ersten Rahmens mit dem zweiten Rahmen,
- Validieren einer Transaktion abhängig vom Vorhandensein oder Fehlen einer Information, die dem verglichenen ersten und zweiten Rahmen gemeinsam ist.

7. Computerprogramm, das Programmcodeanweisungen zur Durchführung des Verfahrens zum Empfang eines Signals nach einem der Ansprüche 1 bis 5 im Verlauf einer intrakorporalen Kommunikation über einen Benutzer (U) als Träger eines Endgeräts (1) nach Anspruch 6, wenn es auf dem Endgerät durchgeführt wird.

8. Datenträger, der von einem Computer gelesen werden kann und Anweisungen eines Computerprogramms nach Anspruch 7 umfasst.

9. Verfahren zum Senden eines Signals im Verlauf einer intrakorporalen Kommunikation über einen Benutzer (U) als Träger eines Endgeräts (1), das Folgendes an einer Kommunikationsvorrichtung (2) umfasst:
- Erkennen (S5) einer Bewegung der Annäherung des Benutzers (U) an die Kommunikationsvorrichtung (2), wobei die Bewegung zwischen zwei Zeitpunkten durchgeführt wird,
- Senden (S9) eines Signals, das die Bewegung der Annäherung charakterisiert, an das Endgerät, wobei das Signal einen ersten Funkdatenrahmen enthält, der zwischen den beiden Zeitpunkten erzeugt wird, wobei der erste Rahmen die gleiche Frequenz aufweist wie diejenige des gesendeten Signals,
**dadurch gekennzeichnet, dass** das gesendete Signal außerdem einen zweiten Funkdatenrahmen umfasst, der zwischen den beiden Zeitpunkten erzeugt wird, wobei der zweite Rahmen eine andere Frequenz aufweist als diejenige des gesendeten Signals.

10. Verfahren zum Senden nach Anspruch 9, wobei die mindestens eine Information, die dem ersten und zweiten Rahmen gemeinsam ist, eine Kennung oder eine Standortinformation der Kommunikationsvorrichtung ist.

11. Verfahren zum Empfang nach Anspruch 9 oder Anspruch 10, wobei die gemeinsame Information in binärer Form dargestellt ist.

12. Verfahren zum Senden nach einem der vorhergehenden Ansprüche, wobei der zweite Rahmen zwischen den beiden Zeitpunkten mehrmals erzeugt wird.

13. Verfahren zum Senden nach einem der vorhergehenden Ansprüche, wobei der zweite Rahmen zwischen den beiden Zeitpunkten einmal erzeugt wird und repräsentativ dafür ist, dass der Benutzer zwischen den beiden Zeitpunkten die Kommunikationsvorrichtung berührt hat.

14. Kommunikationsvorrichtung (2), die Fähigkeiten zum Senden eines Signals im Verlauf einer intrakorporalen Kommunikation über einen Benutzer als Träger des Endgeräts aufweist, wobei die Vorrichtung dazu konfiguriert ist, Folgendes durchzuführen:
- Erkennen einer Bewegung der Annäherung des Benutzers an die Kommunikationsvorrichtung, wobei die Bewegung zwischen zwei Zeitpunkten durchgeführt wird,
- Senden eines Signals, das die Bewegung der Annäherung charakterisiert, an das Endgerät, wobei das Signal einen ersten Funkdatenrahmen enthält, der zwischen den beiden Zeitpunkten erzeugt wird, wobei der erste Rahmen die gleiche Frequenz aufweist wie diejenige des gesendeten Signals, wobei die Vorrichtung **dadurch gekennzeichnet ist, dass** das Signal außerdem einen zweiten Funkdatenrahmen umfasst, der zwischen den beiden Zeitpunkten erzeugt wird, wobei der zweite Rahmen eine andere Frequenz aufweist als diejenige des gesendeten Signals.

15. Computerprogramm, das Programmcodeanweisungen zur Durchführung des Verfahrens zum Senden eines Signals im Verlauf einer intrakorporalen Kommunikation über einen Benutzer (U) als Träger eines Endgeräts (1) nach einem der Ansprüche 9 bis 13 umfasst, wenn es auf einer Kommunikationsvorrichtung nach Anspruch 14 durchgeführt wird.

## Claims

1. Method for receiving a signal during an intra-body communication via a user (U) carrying a terminal (1), comprising the following, at the level of the terminal:
- receiving (S10), from a communication device (2), a signal characterizing the fact that the user has performed an approach gesture towards the device between two times,
- detecting (S121), in the received signal, a first radio data frame generated between the two times, said first frame being at the same frequency as that of the received signal,
**characterized in that** it comprises the following, at the level of the terminal:
- detecting (S121), in the received signal, a second radio data frame generated between the two times, said second frame being at a frequency different from that of the received signal,
- comparing (S122) the first frame with the second frame,
- validating (S13) a transaction depending on the presence or absence of information (INF) common to the compared first and second frames.

2. Reception method according to Claim 1, wherein said at least one item of information (INF) common to the first and second frames is an identifier or location information for locating the communication device.

3. Reception method according to Claim 1 or Claim 2, wherein the common information (INF) is represented in binary form.

4. Reception method according to any one of the preceding claims, wherein the second frame is detected multiple times between the two times.

5. Reception method according to any one of the preceding claims, wherein the second frame is detected once between the two times and is representative of the fact that the user has touched the communication device between the two times.

6. Terminal (1) having capabilities for intra-body communication via a user carrying said terminal, said terminal being configured so as to implement the following:
- receive, from a communication device, a signal characterizing the fact that the user has performed an approach gesture towards the device, between two times,
- detect, in the received signal, a first radio data frame generated between the two times, said first frame being at the same frequency as that of the received signal,
said terminal being **characterized in that** it is furthermore configured so as to implement the following:
- detect, in the received signal, a second radio data frame generated between the two times, said second frame being at a frequency different from that of the received signal,
- compare the first frame with the second frame,
- validate a transaction depending on the presence or absence of information common to the compared first and second frames.

7. Computer program comprising program code instructions for implementing the method for receiving a signal according to any one of Claims 1 to 5 during an intra-body communication via a user (U) carrying a terminal (1) according to Claim 6 when it is executed on said terminal.

8. Computer-readable information medium comprising instructions of a computer program according to Claim 7.

9. Method for transmitting a signal during an intra-body communication via a user (U) carrying a terminal (1), comprising the following, at the level of a communication device (2):
- detecting (S5) an approach gesture performed by the user (U) towards the communication device (2), said gesture being performed between two times,
- transmitting (S9), to the terminal, a signal characterizing the approach gesture, said signal containing a first radio data frame generated between the two times, said first frame being at the same frequency as that of the transmitted signal,
**characterized in that** said transmitted signal furthermore comprises a second radio data frame generated between the two times, said second frame being at a frequency different from that of the transmitted signal.

10. Transmission method according to Claim 9, wherein said at least one item of information common to the first and second frames is an identifier or location information for locating the communication device.

11. Transmission method according to Claim 9 or Claim 10, wherein the common information is represented in binary form.

12. Transmission method according to the preceding claims, wherein the second frame is generated multiple times between the two times.

13. Transmission method according to the preceding claims, wherein the second frame is generated once between the two times and is representative of the fact that the user has touched the communication device between the two times.

14. Communication device (2) having capabilities for signal transmission during an intra-body communication via a user carrying a terminal, said device being configured so as to implement the following:
- detect an approach gesture performed by the user towards the communication device, said gesture being performed between two times,
- transmit, to the terminal, a signal characterizing the approach gesture, said signal containing a first radio data frame generated between the two times, said first frame being at the same frequency as that of the transmitted signal, said device being **characterized in that** said transmitted signal furthermore comprises a second radio data frame generated between the two times, said second frame being at a frequency different from that of the transmitted signal.

15. Computer program comprising program code instructions for implementing the method for transmitting a signal during an intra-body communication via a user (U) carrying a terminal (1) according to any one of Claims 9 to 13 when it is executed on a communication device according to Claim **14.**
